# EUROPEAN PATENT APPLICATION

(11) **EP 2 543 460 A1**
(43) Date of publication of application: **09.01.2013**
(21) Application number: 12175200.0
(22) Date of filing: 05.07.2012
(51) Int. Cl.: B23K 9/02, B23K 9/028, B23K 9/127, B23K 37/02

(54) **Orbital welding apparatus with two separate backing rings**

(30) Priority: 06.07.2011 US 201113176848
(71) Applicant: J.Ray McDermott, S.A., Houston, Texas 77079 (US)
(72) Inventor: Berbakov, Paul J., Coconut Creek, Florida 33066 (US); Doyle, Thomas E., Louisville, Ohio 44641 (US); Noel, Clyde D., Houma, LA 70364 (US); Breaux, Terry L., Houma, LA 70360 (US)
(74) Representative: Meldrum, David James

(57) **Abstract**

A pipe welding arrangement (10) that allows for real-time independent control of all carriages, torches, and ancillary components by design is provided. The approach uses a split-ring race that is mounted on a backing ring of similar design. Numerous welding heads (24) are mounted on carriages that are distributed at set intervals along the circumference of the race. The left and right side race and backing ring assemblies are split at the twelve o'clock and six o'clock positions. They can be decoupled and spread apart horizontally to facilitate installation and for clearing obstacles. Alignment tools (tapered pins) (32) facilitate assembly. Locking devices (20) located near each split interface, coupled with the alignment pins (32), assure that the race acts as a continuous unit during the welding operation. Linear actuators (22) mounted on the backing rings maintain concentricity between the race and the welded tube and act as a positive clamping system.

## Description

### FIELD AND BACKGROUND

The invention is generally related to the automatic pipe welding process and, more particularly but not exclusively, to the simultaneous and independent control of multi-carriage/multi-torch arrangements.

Pipeline welding has evolved over the years from manual welding to single head semiautomatic orbital welding, to multiple-head automatic welding. Each new method came with improvements in quality and productivity. However, the latest approach was not able to achieve its theoretical maximum potential because of its inability to control all parameters of each welding head independently, particularly velocity and acceleration. Also, these machines lack the ability to provide the clearances that nozzles and other large attachments require.

Automatic welding systems generally consist of one or more welding torches, a circular race concentric to the pipes to be joined, and a motorized carriage (normally referred to as a "bug") that carries the weld heads and some ancillary equipment along a weld seam. The circular race has a clamshell design that is hinged at one end and installed manually over the tubes. This is the most common method for orbital welding of pipelines. Its drawbacks are long set-up times and single carriage operation.

Another approach is to use one or two continuous races supported on a stationary frame that has multiple welding heads mounted at fixed intervals. Here the carriage is a complete or partial ring where two or more welding heads are mounted. This approach allows for multi-torch simultaneous operation, but it does not allow for independent velocity/acceleration control of each weld head.

### SUMMARY

Particular aspects and embodiments are set forth in the appended claims.

The present disclosure is drawn to an arrangement that allows for real-time independent control of all carriages, torches, and ancillary components by design. The disclosed techniques use a split-ring race that is mounted on a backing ring of similar design. Numerous welding heads are mounted on carriages that are distributed at set intervals along the circumference of the race. The left and right side race and backing ring assemblies are split at the twelve o'clock and six o'clock positions. They can be decoupled and spread apart horizontally to facilitate installation and for clearing obstacles. Alignment tools (tapered pins) facilitate assembly. Locking devices located near each split interface, coupled with the alignment pins, assure that the race acts as a continuous unit during the welding operation. Linear actuators mounted on the backing rings maintain concentricity between the race and the welded tube and act as a positive clamping system. They also maintain perpendicularity between the axis of the pipe and the plane of the split race.

Various features and combinations therefor provided by the present teachings are pointed out with particularity in the claims annexed to and forming a part of this disclosure. For a better understanding of the teachings, their operating advantages and specific objects attained by their uses, reference is made to the accompanying drawings and descriptive matter in which examples are illustrated.

### BRIEF DESCRIPTION OF THE DRAWINGS

In the accompanying drawings, forming a part of this specification, and in which reference numerals shown in the drawings designate like or corresponding parts throughout the same:

FIG. 1 is a perspective view of an orbital welding apparatus in a closed position.

FIG. 2 is a perspective view of an orbital welding apparatus in the open position.

FIG. 3 is a perspective view of an orbital welding apparatus in the open position and mounted on a manipulator structure.

While the present teachings are susceptible to various modifications and alternative forms, specific embodiments are shown by way of example in the drawings and are herein described in detail. It should be understood, however, that drawings and detailed description thereto are not intended to limit the invention to the particular form disclosed, but on the contrary, the invention is to cover all modifications, equivalents and alternatives falling within the spirit and scope of the present invention as defined by the appended claims

### DETAILED DESCRIPTION

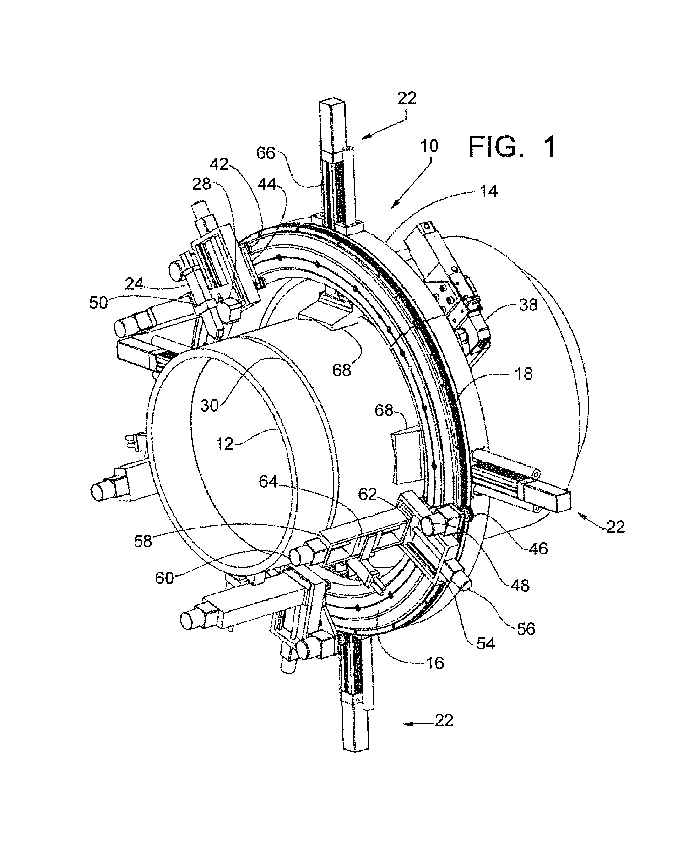

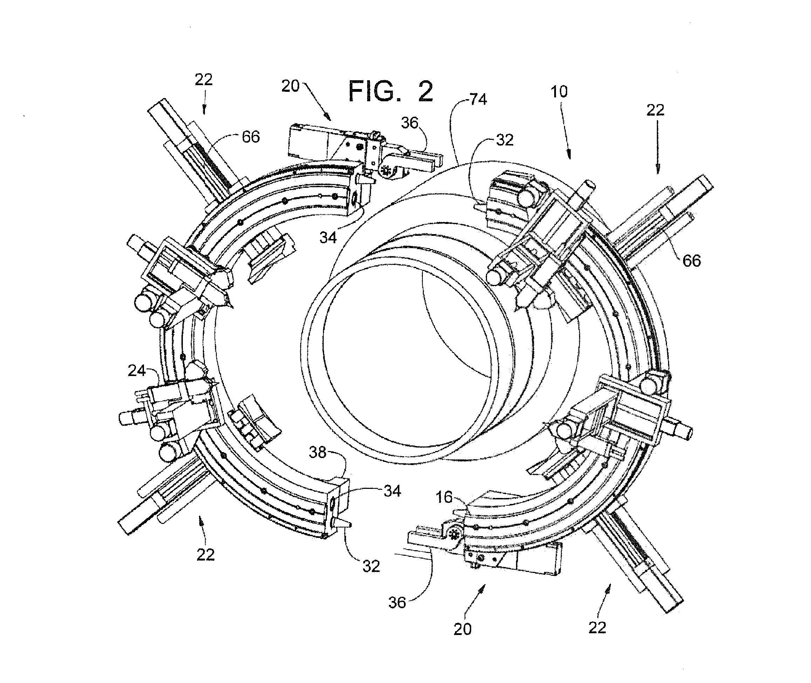

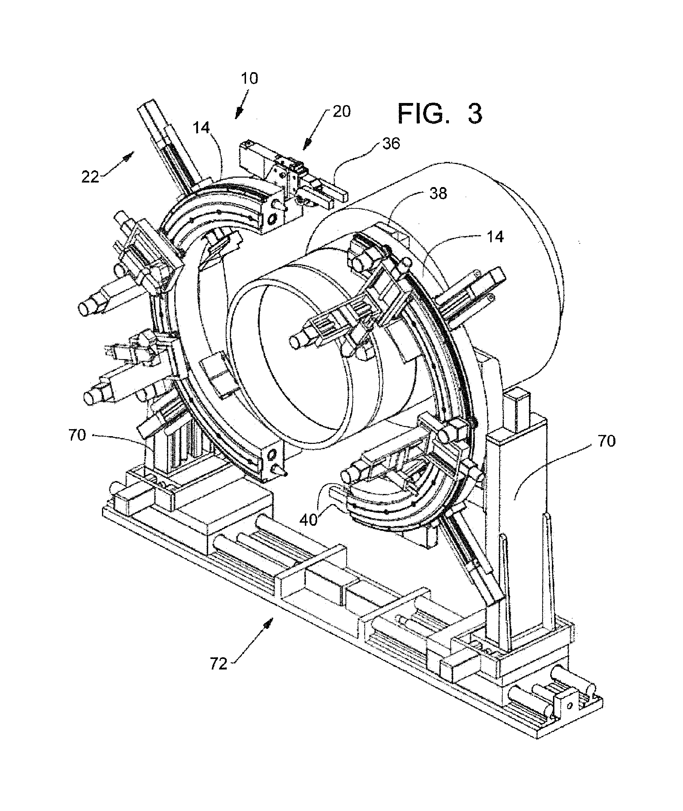

As seen in Fig. 2 and 3, an orbital pipe welding apparatus 10 is split into two halves designed to be attached together around a pipe segment 12 as seen in Fig. 1. The orbital welding apparatus 10 is generally comprised of two separate backing rings 14, circular race 16, circular gear rack 18, locking means 20 for locking the two backing rings together, means 22 for securing the apparatus 10 in welding position to and around work pieces to be welded together (a pipe segment 12), welding torches 24, means 26 for holding and moving the welding torches 24, and scanning means 28 for scanning and tracking the weld area 30.

As seen in Fig. 2 and 3, each backing ring 14 is semi-circular and provided with alignment means such as tapered pins 32 and bores 34 to receive the pins 32. This insures correct alignment of both halves when they are engaged as illustrated in Fig. 1.

Each half is provided with locking means 20 (attached to the backing rings 14) which is comprised of one portion with a prong 36 and a second portion with a receptacle 38 for receiving the prong 36. Prong 36 is received in receptacle 38 and rotated to lock the two halves of the welding apparatus 10 together.

Circular race 16 is provided with grooves 40, best seen in Fig. 3, for receiving rollers 42 on welding carriages 44. Welding carriages 44 are selectively caused to move along the circumference of the welding apparatus 10 by the use of a pinion gear 46 and drive motor 48 attached to the carriages 44.

Also attached to each welding carriage 44 are a welding torch holder 50, a welding torch 52, a vertical slide 54, a vertical slide drive motor 56, a horizontal/axial slide 58, and a horizontal/axial slide drive motor 60. The vertical and axial slides 54 and 58 each use a screw drive to move a plate on the screw in a manner that is generally known.

The axial slide 58 is attached to the movable plate 62 of the vertical slide 54 (best seen in Fig. 1). The welding torch holder 50 and scanning means 28 are attached to the movable plate 64 (best seen in Fig. 1) of the axial slide 58.

Means 22 for securing the welding apparatus 10 in position to and around a pipe 12 for welding operations is provided in the form of a plurality of linear actuators 66 and linear actuator feet 68 spaced around each backing ring 14.

In operation, each half of the welding apparatus 10 is preferably mounted on left and right side manipulators 70 of a lateral base slide 72. The manipulators 70 are mounted on the base slide 72 so as to allow selective motion of the manipulators 70 to move the welding apparatus 10 between open and closed positions. The manipulators 70 are positioned so as to have the welding apparatus 10 in the open position as seen in Fig. 2 and 3.

A section of pipe, which may or may not have a coating 74 applied, is positioned so as to preferably be coaxial with the two halves of welding apparatus 10 and a section of pipe 12 to be added is also placed in position as seen in Fig. 3 such that one end is in contact and aligned with the first section of pipe. The manipulators 70 are moved along the base 72 to cause both halves of welding apparatus 10 to engage. Tapered pins 32 are received in bores 34 to insure alignment and form a continuous circle with backing rings 14, race 16, and gear rack 18. Locking means 20 is used to lock both backing rings 14 together. Linear actuators 66 move actuator feet 68 into contact with the pipe to maintain the pipe in coaxial alignment with the welding apparatus 10. They also maintain perpendicularity between the axis of the pipe 12 and the plane of the split race 16.

Weld area scanning means 28 and vertical and axial slides 54, 58 are used in conjunction to scan the weld seam area and position and move the welding torches 24 vertically and axially to weld the two pipe sections together while they are rotated around the pipe by pinion gears 46 and drive motors 48.

Further specific feature combinations in accordance with the present disclosure are set out in the following numbered clauses.
Clause 1 An orbital welding apparatus, comprising: two separate semi-circular backing rings; alignment means for joining the backing rings to form a continuous circle; and at least one welding torch received on each backing ring for independent movement of each welding torch around the circumference of the backing rings during welding operations.
Clause 2 The orbital welding apparatus of clause 1, further comprising means for selectively moving the welding torches on two linear axes relative to the weld area.
Clause 3 The orbital welding apparatus of clause 1 or 2, further comprising means for scanning and tracking the weld area.
Clause 4 The orbital welding apparatus of clause 1, 2 or 3, further comprising means for locking the two backing rings together in a continuous circle.
Clause 5 The orbital welding apparatus of any preceding clause, further comprising means mounted on the backing rings for securing the backing rings in position to and around work pieces to be welded together.
Clause 6 An orbital welding apparatus, comprising: two separate semi-circular backing rings; alignment means for joining the backing rings to form a continuous circle; at least one welding torch received on each backing ring for independent movement of each welding torch around the circumference of the backing rings during welding operations; means for selectively moving the welding torches on two linear axes relative to the weld area; and means for scanning and tracking the weld area.
Clause 7 The orbital welding apparatus of clause 6, further comprising means for locking the two backing rings together in a continuous circle.
Clause 8 The orbital welding apparatus of clause 6 or 7, further comprising means mounted on the backing rings for securing the backing rings in position to and around work pieces to be welded together.
Clause 9 An orbital welding apparatus, comprising: two separate semi-circular backing rings; alignment means for joining the backing rings to form a continuous circle; at least one welding torch received on each backing ring for independent movement of each welding torch around the circumference of the backing rings during welding operations; means for selectively moving the welding torches on two linear axes relative to the weld area; means for scanning and tracking the weld area; and means for locking the two backing rings together in a continuous circle.
Clause 10 The orbital welding apparatus of clause 9, further comprising means mounted on the backing rings for securing the backing rings in position to and around work pieces to be welded together.

The disclosed approaches provide several advantages.

Set up times are reduced by having the welding apparatus split into two halves that are designed to be aligned and form a continuous circle when brought together.

The two halves of the apparatus allow it to be opened to facilitate installation of the pipe and for clearing obstacles on the pipe.

Multiple welding heads are provided for simultaneous operation.

The multiple welding heads are capable of independent control for velocity and acceleration.

While specific embodiments and/or details of the disclosed approaches have been shown and described above to illustrate the application of the principles of the invention, it is understood that this invention may be embodied as more fully described in the claims, or as otherwise known by those skilled in the art (including any and all equivalents), without departing from such principles.

## Claims

1. An orbital welding apparatus, comprising:
two separate semi-circular backing rings;
alignment means for joining the backing rings to form a continuous circle; and
at least one welding torch received on each backing ring for independent movement of each welding torch around the circumference of the backing rings during welding operations.

2. The orbital welding apparatus of claim 1, further comprising means for selectively moving the welding torches on two linear axes relative to the weld area.

3. The orbital welding apparatus of claim 1 or 2, further comprising means for scanning and tracking the weld area.

4. The orbital welding apparatus of claim 1, 2 or 3, further comprising means for locking the two backing rings together in a continuous circle.

5. The orbital welding apparatus of any preceding claim, further comprising means mounted on the backing rings for securing the backing rings in position to and around work pieces to be welded together.

6. A method of welding comprising:
positioning about two sections of pipe to be joined together an orbital welding apparatus having two separate semi-circular backing rings, alignment means for joining the backing rings to form a continuous circle; and at least one welding torch received on each backing ring for independent movement of each welding torch around the circumference of the backing rings during welding operations;
activating the welding torches; and
moving the activated welding torches around the circumference of the backing rings to cause a weld between the two sections of pipe.
